# EUROPEAN PATENT SPECIFICATION

(11) **EP 3 540 892 B1**
(45) Date of publication and mention of the grant of the patent: **27.07.2022**
(21) Application number: 18305294.3
(22) Date of filing: 16.03.2018
(51) Int. Cl.: H02J 1/04, H02J 1/10, H04B 3/44, H04B 10/80

(54) **TRANSMISSION SYSTEM HAVING A TRUNK AND A BRANCH**
ÜBERTRAGUNGSSYSTEM MIT EINEM STAMM UND EINEM ZWEIG
SYSTEME DE TRANSMISSION AVEC UN TRONC ET UNE BRANCHE

(43) Date of publication of application: 18.09.2019
(73) Proprietor: Alcatel Submarine Networks, 91620 Nozay (FR)
(72) Inventor: VERHAEGE, Thierry, 91620 Nozay (FR); AUDEBERT, Rodolph, 91620 Nozay (FR); ANTHEAUME, Olivier, 91620 Nozay (FR); CORDIER, Alain, 91620 Nozay (FR)
(74) Representative: Whiting, Gary

(56) References cited:
- EP-A1- 2 393 220
- EP-A2- 0 924 881

## Description

### Field

The present specification relates to an apparatus according to the preamble of claim 1, a corresponding method, and also to a transmission system, such as a submarine transmission system, having such an apparatus.

### Background

Transmission systems having a trunk and one or more branches are known. Each of the one or more branches may be linked to the trunk by a branching unit. By way of example, submarine transmission systems may use equipment installed underwater, such as branching units and repeaters, which need electric power supply (typically DC power supply) to feed electronics circuitry. In a submarine transmission system, the trunk may be supplied from both ends, whilst the branch(es) may be supplied from one end and earthed by a branching unit at the other, submarine, end.

EP 0924881 describes an optical transmission system of a double branching system configured to prevent a large current to power feeding lines when any trouble occurs in one or more of the power feeding lines, a branch station connects to two branching units. A power feeding line connects a trunk station to a feed line connecting terminal A of the branching unit, a power feeding line connects a feed line connecting terminal C of the branching unit to the branch station. A power feeding line connects the branch station to a feed line connecting terminal C of the branching unit, and a power feeding line connects a feed line connecting terminal B of the branching unit to a trunk station. A power feeding line connects a feed line connecting terminal B of the branching unit to a feed line connecting terminal A of the branching unit. In the branching unit, the feed line connecting terminals A and C are connected to each other, and a relay circuit opens a switch. In the branching unit, the feed line connecting terminals C and B are connected to each other, and a relay circuit opens a switch. A branching unit having a DC-DC converter is disclosed in EP 2 393220 A1.

### Summary

In a first aspect, according to the present invention, an apparatus is provided as defined by the features of independent claim 1.

In some embodiments, the trunk current is provided by a trunk power supply and the branch current is provided by a branch power supply. In some other embodiments, the trunk current and the branch current are both provided by a trunk power supply.

In a second aspect, this specification describes a transmission system comprising a trunk and one or more branches, wherein one or more of said branches are coupled to the trunk using any apparatus as described above with reference to the first aspect. The trunk may connect a first terminal and a second terminal of the transmission system. The trunk current may, for example, be provided by a first trunk power supply at the first terminal and a second trunk power supply at the second terminal.

In an embodiment, the transmission system is an optical transmission system and/or the transmission system is a submarine transmission system.

According to the invention, moreover, a method is provided having the features of the independent method claim.

The DC-DC converter is configured to transfer power from the trunk to the branch and vice-versa, in order to equalise the trunk current and the branch current. The DC-DC converter may include a switching arrangement for controlling the transfer of power from the trunk to the branch and vice-versa.

In one example, the trunk current is provided by a trunk power supply (or by two trunk power supplies) and the branch current is provided by a branch power supply. In another example, the trunk current and the branch current are both provided by a trunk power supply (or by two trunk power supplies).

### Brief description of the drawings

Example embodiments will now be described, by way of non-limiting examples, with reference to the following schematic drawings, in which:
FIG. 1 is a block diagram of a transmission system according to a background example not claimed in the present disclosure;
FIG. 2 is a block diagram of a reconfigured transmission system according to a background example not claimed in the present disclosure, showing an example fault condition;
FIG. 3 is a block diagram of a transmission system in accordance with an example embodiment;
FIG. 4 is a schematic block diagram of a DC-DC converter in accordance with an example embodiment;
FIG. 5 is a block diagram of a DC-DC converter in accordance with an example embodiment in a first switching state;
FIG. 6 is a block diagram of the DC-DC converter of FIG. 5 in a second switching state;
FIG. 7 is a flow chart showing a method in accordance with an example embodiment; and
FIG. 8 is a block diagram of a transmission system in accordance with an example embodiment.

### Detailed description

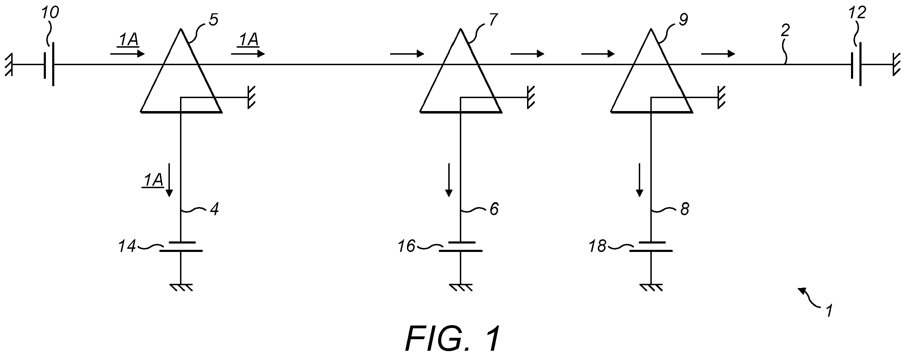

FIG. 1 is a block diagram, indicated generally by the reference numeral 1, of a transmission system. The transmission system 1 comprises a trunk 2, a first branch 4, a second branch 6 and a third branch 8. The trunk 2 and the branches 4, 6 and 8 may be equipped with optical fibres for signal transmission and electrical conductors (e.g. copper conductors) for supplying power (for example to repeaters of the transmission system). Although three branches are shown in the example transmission system 1, the principles described herein are applicable to systems having any number of branches (i.e. one or more branches).

The branches of the transmission system 1 are coupled electrically and optically to trunk 2 at branching units. Thus, the system 1 includes a first branching unit 5 that couples the trunk 2 and the first branch 4, a second branching unit 7 that couples the trunk 2 and the second branch 6, and a third branching unit 9 that couples the trunk 2 and the third branch 8. The first, second and third branching units are also used to couple the sections of the trunk 2 together.

Electrical power is provided within the transmission system 1 (by way of example, a current of 1A is indicated as flowing in various parts of the system 1). For example, electrical power is supplied to laser pumps that form part of repeater modules distributed throughout the transmission system 1 (not explicitly shown in FIG. 1 - multiple such repeaters may be provided in the trunk and/or the branches). In the example system 1, a first trunk power supply 10 and a second trunk power supply 12 together provide electrical power to the trunk 2, thereby providing a double-end feeding system in which each power supply might provide 50% of the trunk voltage. Each branch includes a power supply such that the transmission system 1 comprises a first branch power supply 14, a second branch power supply 16 and a third branch power supply 18.

The trunk 2 and the branches 4, 6 and 8 may, for example, form part of a submarine telecommunications network. At least parts of the trunk 2, at least parts of the branches 4, 6, and 8, and at least parts of the branching units, 5, 7, and 9, may be under the water. The first and second trunk power supplies 10 and 12 may be provided on shore or offshore (platform) at different ends of the trunk. Similarly, the branch power supplies 14, 16 and 18 may also be provided on shore or offshore. As shown in FIG. 1, in the system 1, the trunk 2 is supplied from both (terrestrial) ends, while the branches 4, 6 and 8 are supplied from one (terrestrial) end and connected to the sea bed by one of the branching units 5, 7 and 9 at the other end.

In the event that either the first trunk power supply 10 or the second trunk power supply 12 fails, then the other of those trunk power supplies will have to provide all of the necessary voltage to maintain the trunk power. This may not be possible in all circumstances.

In the event that one of the branch power supplies 14, 16 and 18 fails, then the branch traffic will be lost. This loss may be temporary, provided that the network can be reconfigured (for example, by sending suitable control signals to the relevant branching unit and actuating high voltage relays within the branching unit accordingly).

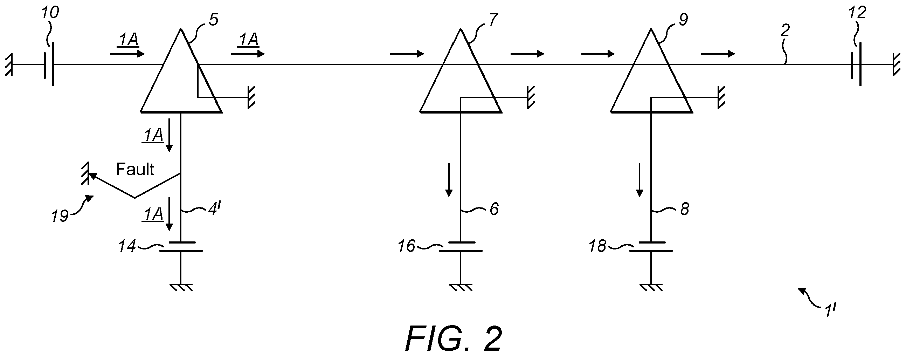

FIG. 2 is a block diagram of a transmission system, indicated generally by the reference numeral 1', showing a reconfiguration of the system 1 in the event of an example branch fault condition. The system 1' includes the trunk 2, the second branch 6, the third branch 8, the first, second and third branching units 5, 7 and 9, the first and second trunk power supplies 10 and 12, and the first, second and third branch power supplies 14, 16 and 18 described above. The system 1' also includes a first branch 4' that differs from the first branch 4 described above in that a ground fault, indicated generally by the reference numeral 19, is shown.

As shown in FIG. 2, the first branching unit 5 has been reconfigured so that the first branch 4' becomes part of a new trunk and part of the old trunk becomes a new branch. The reconfiguration may be made through optical signals sent to the branching unit 5 which actuates high voltage relays within the branching unit accordingly.

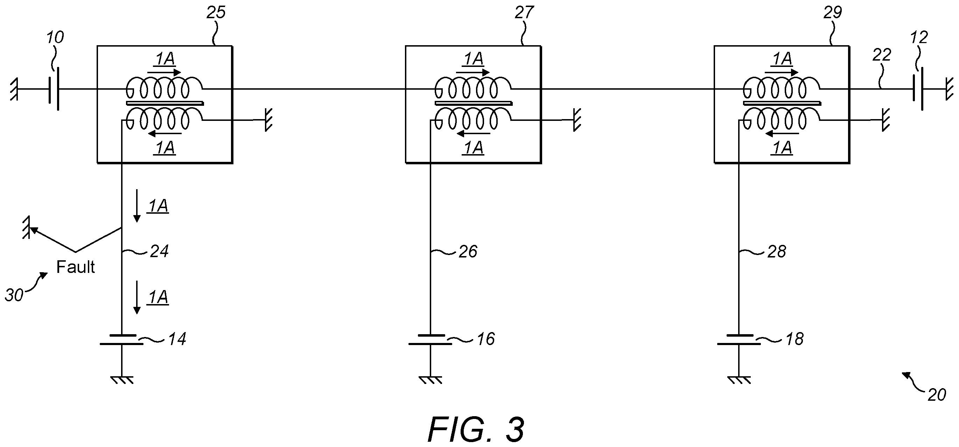

FIG. 3 is a block diagram of a transmission system, indicated generally by the reference numeral 20, in accordance with an example embodiment.

The transmission system 20 comprises a trunk 22, a first branch 24, a second branch 26 and a third branch 28. The trunk 22 and the branches 24, 26 and 28 may, for example, be implemented using optical fibres and electrical conductors and have many similarities with the trunk 2 and branches 4, 6 and 8 described above. Although three branches are shown in the example transmission system 20, the principles described herein are applicable to systems having any number of branches (i.e. one or more branches).

The branches of the transmission system 20 are coupled to trunk 22 at branching units. Thus, the system 20 includes a first branching unit 25 that couples the trunk 22 and the first branch 24, a second branching unit 27 that couples the trunk 22 and the second branch 26, and a third branching unit 29 that couples the trunk 22 and the third branch 28.

As in the example system 1 described above, the transmission system 20 comprises the first trunk power supply 10 and the second trunk power supply 12 that together provide electrical power to the trunk 22, thereby providing a double-end feeding system in which each power supply might provide 50% of the trunk voltage. Further, each branch includes a power supply such that the transmission system 20 includes the first branch power supply 14, the second branch power supply 16 and the third branch power supply 18.

The first branching unit 25 includes a DC-DC converter that is provided to equalise the current of the trunk 22 and the current of the first branch 24. Similarly, the second and third branching units include DC-DC converters that are provided to equalise the current of the trunk 22 and the currents of the second branch 26 and third branch 28 respectively. Thus, as described further below, the DC-DC converters are bi-directional. (Currents of 1A are shown, by way of example only, as flowing in the system 20.)

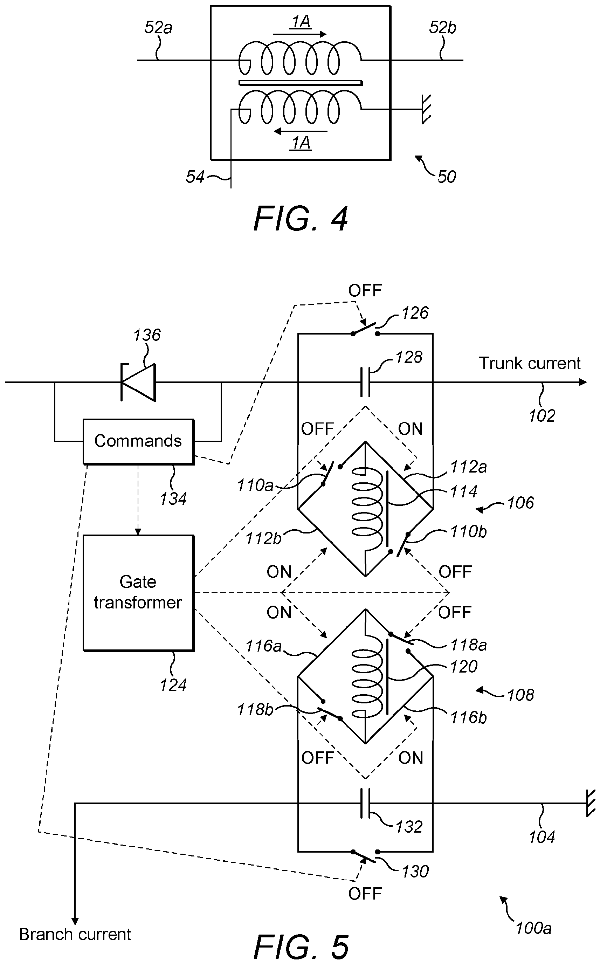

FIG. 4 is a schematic block diagram of a DC-DC converter, indicated generally by the reference numeral 50, in accordance with an example embodiment. The DC-DC converter 50 may be used within the branching units 25, 27 and 29 described above.

The DC-DC converter 50 shown in FIG. 4 demonstrates schematically an aspect of the functionality of the branching units 25, 27 and 29 described above. As described in detail below, the DC-DC converter 50 ensures that the trunk current (indicated by the reference numerals 52a and 52b) is equal to the branch current (indicated by the reference numeral 54).

The DC-DC converter 50 can transfer power, as required, from the trunk 52 to the branch 54 and vice-versa. Thus, the DC-DC converters of the branch units 25, 27 and 29 of the system 20 work together to impose the same current all along the trunk and the branches.

FIG. 3 shows an example fault in the first branch 24 (indicated generally by the reference numeral 30). As described above, in response to that fault, the DC-DC converter of the first branching unit 25 transfers power so as to maintain equal the currents of the trunk and the first branch. Further, the other power supplies in the transmission system 20 work together to impose the same current along the trunk and the branches such that there is no service interruption and no need for a reconfiguration of the transmission system 20.

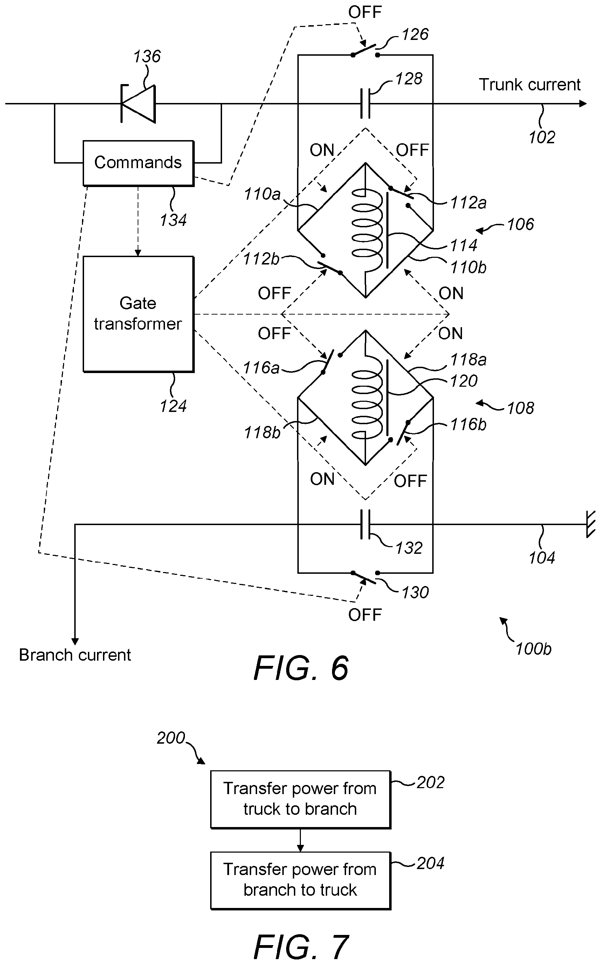

FIG. 5 is a block diagram of a DC-DC converter, indicated generally by the reference numeral 100a, in accordance with an example embodiment in a first switching state. FIG. 6 shows the same DC-DC converter, indicated generally by the reference numeral 100b, in a second switching state. The DC-DC converters 100a and 100b are an example implementation of the DC-DC converter 50 described above.

The DC-DC converters 100a and 100b comprises a trunk 102 and a branch 104. As shown in Figures 5 and 6, the trunk 102 carries a trunk current and the branch 104 carried a branch current.

The DC-DC converters 100a and 100b further comprise a trunk bridge circuit 106 and a branch bridge circuit 108. The trunk bridge circuit 106 includes a first pair of switching components 110a and 110b and a second pair of switching components 112a and 112b.

Similarly, the branch bridge circuit 108 includes a first pair of switching components 116a and 116b and a second pair of switching components 118a and 118b. The said switching circuits may be implemented using insulated-gate bipolar transistors (IGBTs), but many other implementations are possible. The DC-DC converters 100a and 100b further comprise a first inductor 114 magnetically coupled with a second inductor 120 that collectively form the transformer 56 of the DC-DC converter 50 described above.

The switching components 110a, 110b, 112a, 112b, 116a, 116b, 118a, and 118b are switched between open and closed positions in response to control signals from a commands module 134, which control signals are shaped by a gate transformer 124 for compatibility with the switching components. In the first configuration shown in Figure 5, the first pair of switching components 110a and 110b of the trunk bridge circuit 106 and the second pair of switching components 118a and 118b of the branch bridge circuit 108 are in the open position and the other switching components (i.e. the second pair of switching components 112a and 112b of the trunk bridge circuit 106 and the first pair of switching components 116a and 116b of the branch bridge circuit 108) are in the closed position. Conversely, as shown in Figure 6, in the second configuration, the first pair of switching components 110a and 110b of the trunk bridge circuit 106 and the second pair of switching components 118a and 118b of the branch bridge circuit 108 are in the closed position and the other switching components (i.e. the second pair of switching components 112a and 112b of the trunk bridge circuit 106 and the first pair of switching components 116a and 116b of the branch bridge circuit 108) are in the open position. In one embodiment, the switch positions change from the states shown in FIG. 5 to the states shown in FIG. 6 at a relatively high frequency, such as 40kHz or 100kHZ. Of course, other frequencies of operation are possible.

The DC-DC converters 100a and 100b also comprise a first bypass switch 126, a first capacitor 128, a second bypass switch 130 and a second capacitor 132. As described further below, the by-pass switch is activated for start-up and protection against overvoltage. The first and second capacitors are used to make the DC current less affected by the switching within the bridge circuits 106 and 108.

Command signals for the gate transformer 124 and the first and second bypass switches 126 and 130 are provided by the commands circuit 134. As shown in Figures 5 and 6, a Zener diode 136 is provided in order to provide power to the commands circuit 134, although other configurations could readily be provided.

The commands circuit 134 controls the DC-DC converter to switch between the first and second configurations shown 100a and 100b. For example, in one exemplary implementation, the switching occurs at 40 kHz. As a result, the DC-DC converter 100 tends to impose that the trunk current and the branch current are nearly equal and develops the necessary voltages for that condition (note that a small difference in currents will exist for transformer magnetization). Thus, one of trunk 102 and the branch 104 will act as a voltage source and the other of the trunk 102 and the branch 104 will act as a voltage sink, depending of the system conditions.

The by-pass switches 126 and 130 are used for allowing start-up (in which the trunk current is used to supply the electronics) and may be used for by-passing the trunk and branch bridge circuits 106 and 108 in the event of a fault (such that the branch and trunk can be made independent and uninterrupted).

FIG. 7 is a flow chart, indicated generally by the reference numeral 200, showing a method in accordance with an example embodiment. The method 200 may be implemented by each of the first, second and third branching units 25, 27 and 29 of the transmission system 20 described above.

At operation 202 of the method 200, it is determined whether to transfer electrical power from the trunk 22 to the relevant branch (e.g. the first, second or third branch 24, 26 or 28), if required in order to equalise the trunk and branch current.

At operation 204 of the method 200, it is determined whether to transfer electrical power from the relevant branch (e.g. the first, second or third branch 24, 26 or 28) to the trunk 22, if required in order to equalise the trunk and branch current.

As described in detail above, power is transferred between the trunk and the branches, in accordance with the operations 202 and 204 described above, in order to balance the branch and trunk currents. User intervention is not required to perform the balancing and so the system 20 automatically reacts to changes, such as short circuit faults.

In the transmission system 20, in the event that, for example, the first trunk power supply 10 fails, then the second trunk power supply 12 and the first, second and third branch power supplies 14, 16 and 18 work together to impose the same current along the trunk and all branches. Moreover, the voltages in the system are automatically adjusted, with no service interruption and no need for a reconfiguration of the system.

Similarly, in the event that one of the branch power supplies 14, 16 and 18 of the transmission system 20 fails, then the first and second trunk power supplies and the branch power supplies work together to impose the same current along the trunk and all branches.

The embodiments described above generally relate to the reaction of a transmission system, such as the transmission system 20, to faults. The principles described herein also have other potential applications. For example, consider an arrangement in which the demand on the trunk 22 of the transmission system 20 is too high to be supported by the provided trunk power supplies (such as the supplies 10 and/or 12), it may be possible to use one or more of the branch power supplies to meet the trunk demand. Such a configuration may enable a transmission system to be provided with longer trunks and/or less expensive cables.

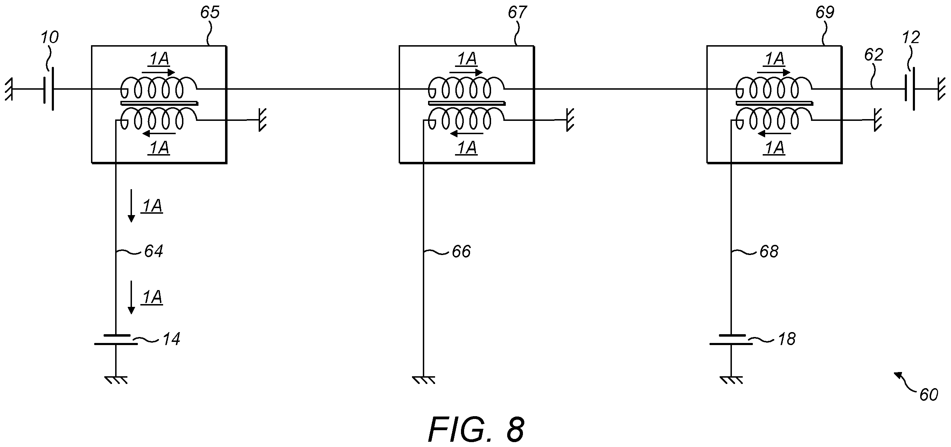

FIG. 8 is a block diagram of a transmission system, indicated generally by the reference numeral 60, in accordance with an example embodiment. The transmission system 60 comprises a trunk 62, a first branch 64, a second branch 66 and a third branch 68 that are similar to the trunk 22 and branches 24, 26 and 28 of the transmission system 20 described above. Although three branches are shown in the example transmission system 20, the principles described herein are applicable to systems having any number of branches (i.e. one or more branches).

The transmission system 20 further comprises a first branching unit 65 that couples the trunk 62 and the first branch 64, a second branching unit 67 that couples the trunk 62 and the second branch 66, and a third branching unit 69 that couples the trunk 62 and the third branch 68. The first, second and third branching units of the transmission system 60 are similar to the first, second and third branching units of the transmission system 20 described above.

As shown in FIG. 8, the transmission system 60 includes the first branch power supply 14 and the third branch power supply 18, but omits the second branch power supply 16 of the transmission system 20. Electrical power for the second branch 66 may be provided by the trunk power supplies and/or the other branch power supplies under the control of the relevant branching unit(s). Of course, although the second branch power supply is omitted in the example system 80, any one or more of the branch power supplies could be omitted from a different example implementation.

If desired, the different functions discussed herein may be performed in a different order and/or concurrently with each other. Furthermore, if desired, one or more of the above-described functions may be optional or may be combined. Similarly, it will also be appreciated that the flow diagram of Figure 7 is an example only and that various operations depicted therein may be omitted, reordered and/or combined.

The systems described herein include a number of potential benefits. These include some or all of the following:
- fewer (or lower voltage) power supplies;
- cheaper and more reliable branching units (e.g. reducing or eliminating communication, and high voltage relays);
- cost savings (less copper, higher voltage);
- longer cable reach (higher voltage);
- service continuity (no time delay for reconfiguration);
- simplified operation (automatic);
- increased resilience to fault conditions.

It will be appreciated that the above described example embodiments and advantages are purely illustrative and are not limiting on the scope of the invention. Other variations and modifications will be apparent to persons skilled in the art upon reading the present specification.

## Claims

1. An apparatus for electrically and optically coupling a trunk (22, 62) of a transmission system to one of one or more branches (24, 26, 28, 64, 66, 68) of the transmission system, wherein the trunk is capable of having a trunk current and said one of the one or more branches is capable of having a branch current, wherein the apparatus is a branching unit (25, 27, 29, 65, 67, 69) comprising a DC-DC converter (50, 100a, 100b), wherein the DC-DC converter comprises a trunk bridge circuit (106), a branch bridge circuit (108) and a transformer coupling the trunk bridge circuit and the branch bridge circuit, **characterized in that** the DC-DC converter is configured to transfer power from the trunk to said one of the one or more branches and vice-versa, in order to equalise the trunk current and the branch current.

2. An apparatus as claimed in claim 1, wherein the DC-DC converter includes a pair of full bridge switching circuits for controlling the transfer of power from the trunk to the branch and vice-versa.

3. A transmission system comprising a trunk and one or more branches, wherein one or more of said branches are coupled to the trunk using an apparatus as claimed in any one of the preceding claims.

4. A transmission system as claimed in claim 3, comprising a trunk power supply (10,12) configured to provide the trunk current, and a branch power supply (14,16, 18) configured to provide the branch current; or comprising a trunk power supply (10, 12) configured to provide both the trunk current and the branch current.

5. A transmission system as claimed in claim 3 or claim 4, wherein the trunk connects a first terminal and a second terminal of the transmission system.

6. A transmission system as claimed in claim 5, comprising a first trunk power supply (10) and a second trunk power supply (12) respectively configured to provide the trunk current at the first terminal and at the second terminal.

7. An apparatus as claimed in claim 1 or claim 2 or a transmission system as claimed in any one of claims 3 to 6, wherein the transmission system is an optical transmission system and/or the transmission system is a submarine transmission system.

8. A method comprising:
electrically and optically coupling a trunk (22, 62) of a transmission system to at least one of one or more branches (24, 26, 28, 64, 66, 68) of the transmission system, wherein the trunk transfers a trunk current and said one of the one or more branches transfers a branch current; and
equalising the trunk current and the branch current using a DC-DC converter comprising a trunk bridge circuit, a branch bridge circuit and a transformer coupling the trunk bridge circuit and the branch bridge circuit, wherein the DC-DC converter uses the transformer to transfer power from the trunk to said one of the one or more branches and vice-versa, in order to equalise the trunk current and the branch current.

## Patentansprüche

1. Vorrichtung zum elektrischen und optischen Koppeln eines Stamms (22, 62) eines Übertragungssystems an einen von einem oder mehreren Zweigen (24, 26, 28, 64, 66, 68) des Übertragungssystems, wobei der Stamm in der Lage ist, einen Stammstrom zu führen und der eine des einen oder der mehreren Zweige in der Lage ist, einen Zweigstrom zu führen, wobei die Vorrichtung eine Abzweigungseinheit (25, 27, 29, 65, 67, 69) ist, die einen DC-DC-Wandler (50, 100a, 100b) umfasst, wobei der DC-DC-Wandler eine Stammbrückenschaltung (106), eine Zweigbrückenschaltung (108) und einen Transformator, der die Stammbrückenschaltung und die Zweigbrückenschaltung koppelt, umfasst, **dadurch gekennzeichnet, dass** der DC-DC-Wandler dazu ausgelegt ist, Energie vom Stamm zu dem einen des einen oder der mehreren Zweige und umgekehrt zu übertragen, um den Stammstrom und den Zweigstrom auszugleichen.

2. Vorrichtung nach Anspruch 1, wobei der DC-DC-Wandler ein Paar von Vollbrückenschaltschaltungen zum Steuern der Übertragung von Energie vom Stamm zum Zweig und umgekehrt beinhaltet.

3. Übertragungssystem, das einen Stamm und einen oder mehrere Zweige umfasst, wobei ein oder mehrere der Zweige unter Verwendung einer Vorrichtung nach einem der vorhergehenden Ansprüche an den Stamm gekoppelt sind.

4. Übertragungssystem nach Anspruch 3, das eine Stammenergieversorgung (10, 12), die dazu ausgelegt ist, den Stammstrom bereitzustellen, und eine Zweigenergieversorgung (14, 16, 18), die dazu ausgelegt ist, den Zweigstrom bereitzustellen, umfasst oder eine Stammenergieversorgung (10, 12) umfasst, die dazu ausgelegt ist, sowohl den Stammstrom als auch den Zweigstrom bereitzustellen.

5. Übertragungssystem nach Anspruch 3 oder Anspruch 4, wobei der Stamm einen ersten Anschluss und einen zweiten Anschluss des Übertragungssystems verbindet.

6. Übertragungssystem nach Anspruch 5, das eine erste Stammenergieversorgung (10) und eine zweite Stammenergieversorgung (12) umfasst, die dazu ausgelegt sind, den Stammstrom am ersten Anschluss bzw. am zweiten Anschluss bereitzustellen.

7. Vorrichtung nach Anspruch 1 oder Anspruch 2 oder Übertragungssystem nach einem der Ansprüche 3 bis 6, wobei das Übertragungssystem ein optisches Übertragungssystem ist und/oder das Übertragungssystem ein Unterwasserübertragungssystem ist.

8. Verfahren, das Folgendes umfasst:
elektrisches und optisches Koppeln eines Stamms (22, 62) eines Übertragungssystems an mindestens einen von einem oder mehreren Zweigen (24, 26, 28, 64, 66, 68) des Übertragungssystems, wobei der Stamm einen Stammstrom überträgt und der eine des einen oder der mehreren Zweige einen Zweigstrom überträgt; und
Ausgleichen des Stammstroms und des Zweigstroms unter Verwendung eines DC-DC-Wandlers, der eine Stammbrückenschaltung, eine Zweigbrückenschaltung und einen Transformator, der die Stammbrückenschaltung und die Zweigbrückenschaltung koppelt, umfasst, wobei der DC-DC-Wandler den Transformator verwendet, um Energie vom Stamm zu dem einen des einen oder der mehreren Zweige und umgekehrt zu übertragen, um den Stammstrom und den Zweigstrom auszugleichen.

## Revendications

1. Appareil pour coupler électriquement et optiquement un tronc (22, 62) d'un système de transmission à une d'une ou de plusieurs branches (24, 26, 28, 64, 66, 68) du système de transmission, dans lequel le tronc est en mesure d'avoir un courant de tronc et ladite une des une ou plusieurs branches est en mesure d'avoir un courant de branche, dans lequel l'appareil est une unité de branchement (25, 27, 29, 65, 67, 69) comprenant un convertisseur CC-CC (50,100a, 100b), dans lequel le convertisseur CC-CC comprend un circuit de pont de tronc (106), un circuit de pont de branche (108) et un transformateur couplant le circuit de pont de tronc et le circuit de pont de branche,
**caractérisé en ce que**
le convertisseur CC-CC est configuré pour transférer de la puissance du tronc à ladite une des une ou plusieurs branches et vice-versa, afin d'égaliser le courant de tronc et le courant de branche.

2. Appareil selon la revendication 1, dans lequel le convertisseur CC-CC comporte une paire de circuits de commutation en pont complet pour commander le transfert de puissance du tronc à la branche et vice-versa.

3. Système de transmission comprenant un tronc et une ou plusieurs branches, dans lequel une ou plusieurs desdites branches sont couplées au tronc en utilisant un appareil selon l'une quelconque des revendications précédentes.

4. Système de transmission selon la revendication 3, comprenant une alimentation électrique de tronc (10,12) configurée pour fournir le courant de tronc, et une alimentation électrique de branche (14, 16, 18) configurée pour fournir le courant de branche ; ou comprenant une alimentation électrique de tronc (10, 12) configurée pour fournir à la fois le courant de tronc et le courant de branche.

5. Système de transmission selon la revendication 3 ou la revendication 4, dans lequel le tronc connecte une première borne et une deuxième borne du système de transmission.

6. Système de transmission selon la revendication 5, comprenant une première alimentation électrique de tronc (10) et une deuxième alimentation électrique de tronc (12) configurées pour fournir respectivement le courant de tronc à la première borne et à la deuxième borne.

7. Appareil selon la revendication 1 ou la revendication 2 ou système de transmission selon l'une quelconque des revendications 3 à 6, dans lequel le système de transmission est un système de transmission optique et/ou le système de transmission est un système de transmission sous-marin.

8. Procédé comprenant :
le couplage électrique et optique d'un tronc (22, 62) d'un système de transmission à au moins une d'une ou de plusieurs branches (24, 26, 28, 64, 66, 68) du système de transmission,
dans lequel le tronc transfère un courant de tronc et ladite une des une ou plusieurs branches transfère un courant de branche ; et
l'égalisation du courant de tronc et du courant de branche en utilisant un convertisseur CC-CC comprenant un circuit de pont de tronc, un circuit de pont de branche et un transformateur couplant le circuit de pont de tronc et le circuit de pont de branche, dans lequel le convertisseur CC-CC utilise le transformateur pour transférer de la puissance du tronc à ladite une des une ou plusieurs branches et vice-versa, afin d'égaliser le courant de tronc et le courant de branche.
